# EUROPEAN PATENT SPECIFICATION

(11) **EP 1 320 829 B1**
(45) Date of publication and mention of the grant of the patent: **29.06.2005**
(21) Application number: 01969711.9
(22) Date of filing: 12.09.2001
(51) Int. Cl.: G06K 7/00, G06K 19/07

(54) **SYNCHRONIZING SAMPLE TIMING IN AN RFID RECEIVER**
SYNCHRONISIERUNG DER GETAKTEN ABTASTUNG IN EINEM RFID EMPFÄNGER
SYNCHRONISATION DE LA TEMPORISATION D'ECHANTILLONS DANS UN RECEPTEUR RFID

(30) Priority: 13.09.2000 US 661311
(43) Date of publication of application: 25.06.2003
(73) Proprietor: EM Microelectronic-Marin SA, 2074 Marin (CH)
(72) Inventor: BUESCHER, Kevin, Scott, Colorado Springs, CO 80919 (US)
(74) Representative: Ravenel, Thierry Gérard Louis
(86) International application number: PCT/EP2001/010550
(87) International publication number: WO 2002/023465

(56) References cited:
- WO-A-00/31915
- GB-A- 2 288 952
- "APPLICATION NOTE Read/Write Devices based on the HITAG Read/Write IC HTRC110" PHILIPS SEMICONDUCTORS, VERSION 1.2, [Online] September 1998 (1998-09), page complete 53 XP002198753 Retrieved from the Internet: <URL:http://www.semiconductors.philips.com /acrobat/other/identification/rc110an2.pdf > [retrieved on 2002-05-14]
- "DATASHEET HTRC110 Hitag Reader Chip" PHILIPS SEMICONDUCTORS. PRODUCT SPECIFICATION ( REV.1.2), January 1999 (1999-01), page COMPLETE18 XP002139555

## Description

### Field of the Invention

The present invention relates to a Radio Frequency Identification Device (RFID) wherein a transceiver communicates with one or more identification tags associated with objects to be identified or tracked. More particularly, the invention relates to an apparatus for synchronizing sample timing in the transceiver.

### Background of the Invention

In a typical RFID, a transceiver transmits a carrier reference signal which is picked up by the antenna of a tag circuit. The carrier signal powers up the tag circuit which generates an amplitude modulated data and/or identification signal which is picked up by the transceiver antenna and processed by receiver circuits in the transceiver. Due to various factors such as component tolerances, sampling of the modulated carrier signal by the reference signal is difficult to optimize because the ideal amplitude modulation can be converted to a combination of amplitude and phase modulation or, in extreme cases, to purely phase modulation.

### Prior Art

Various techniques have been used to solve the problem including envelope detection, I/Q detection and AST (Adaptive Sampling Time). Each of the known techniques has one or more disadvantages ranging from performance degradation to requiring a microprocessor controlled feedback loop.

Philips Semiconductors Application Notes AN97070, pg. 24 - 30, and AN98080, pages 28-40, describe the AST technique. These references teache that data may be recovered from the modulated carrier signal even though the signal is phase and/or amplitude modulated provided the modulated carrier signal is sampled at an optimum time 2x where x is the measured phase angle between the carrier reference signal and the modulated carrier signal subtracted from the ideal phase angle.

### Summary of the Invention

An object of the present invention is to provide a radio frequency identification device wherein a tag reader transmits a radio frequency carrier reference signal and a tag circuit modulates the reference signal to produce a modulated data signal that is returned to the tag reader, the tag reader being characterized in that it comprises:
a delay locked loop for producing a sampling signal that is phase locked to the reference signal;
detector means for detecting a phase difference between the reference signal and the data signal; and,
means responsive to the detector means for injecting an offset signal into the delay locked loop whereby the sampling signal is phase locked to the reference signal with a phase difference that is twice the detected phase difference between the reference signal and the data signal.

In a preferred embodiment, the detector means comprises a dual edge phase detector which measures the difference in phase between both the leading edges of the reference and data signals and the trailing edges of these signals, and produces two pulses having a total duration proportional to twice the phase difference.

Another object of the invention is to provide a radio frequency identification device as described above wherein the means for injecting an offset signal into the delay locked loop comprises current generators for charging a filter capacitor in the delay locked loop, the current generators being connected to the capacitor via switches controlled by output pulses from the dual edge phase detector. A positive current generator is connected to the capacitor when the reference signal leads the data signal and a negative current generator is connected to the capacitor when the data signal leads the reference signal.

A further object of the invention is to provide a radio frequency identification device as described above wherein the voltage on the capacitor controls the delay imparted to the reference signal to produce the sampling signal. The delay locked loop includes a further phase detector for producing an output signal proportional to the difference in phase between the sampling and reference signals. The output signal from the further phase detector controls switches which connect a positive current generator to the filter capacitor when the sampling signal leads the reference signal, or connect a negative current generator to the capacitor when the reference signal leads the sampling signal.

The delay locked loop may be implemented with plural delay elements thus permitting I/Q demodulation of the modulated data signal returned to the tag reader.

Other objects and advantages of the invention will become evident upon consideration of the following description and the accompanying drawings.

### Brief Description of the Drawings

Fig. 1 is a schematic diagram illustrating the basis components of a radio frequency identification system;
Fig. 2 is a block diagram showing the components of a control loop according to the invention;
Fig. 3 shows details of the dual edge phase detector of Fig. 2;
Fig. 4 illustrates details of the phase detector shown in Fig. 2;
Fig. 5 illustrates details of the offset charge pump and loop filter shown in Fig. 2;
Fig. 6 shows details of the controllable delay circuit of Fig. 2; and,
Fig. 7 is a timing diagram illustrating the timing of various signals in the control loop of Fig. 2.

### Detailed Description of the Invention

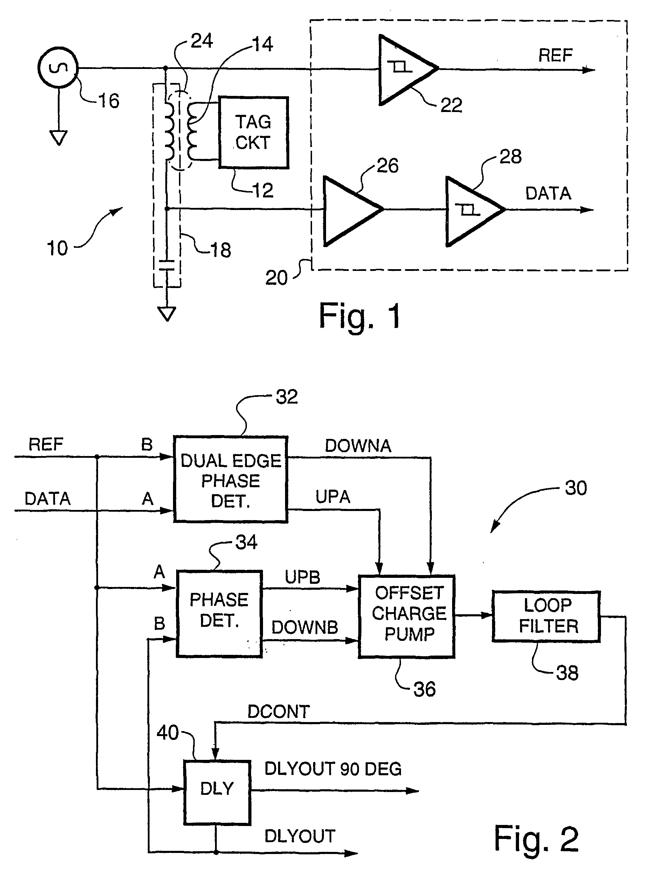

Fig. 1 illustrates a typical RFID 10 comprising a tag circuit 12 having an antenna 14 and a transceiver illustrated as an oscillator 16, an antenna 18 and a receiver 20. Oscillator 16 generates a radio frequency carrier reference signal which is applied to antenna 18. Antenna 18 generates an RF electromagnetic field 24 which is picked up by the tag circuit antenna 14 of any tag circuit 12 brought within the RF field. The carrier signal provides power for tag circuit 12 and the tag circuit amplitude modulates the carrier signal in a known manner to produce a data signal that is returned to receiver 20 via antennas 14 and 18.

Component tolerances and other factors may convert the amplitude modulation to phase modulation so that the data signal is shifted in phase relative to the carrier reference signal by some angle x. According to the invention, the receiver 20 is provided with a control loop 30 (Fig. 2) which effectively determines x and produces a sampling signal (DLYOUT) that is delayed by 2x relative to the carrier reference signal. The sampling signal may then be utilized in the receiver 20 to sample the data signal returned from tag circuit 12 at the optimum time.

Control loop 30 comprises a dual edge phase detector 32, a phase detector 34, an offset charge pump 36, a loop filter 38 and a controllable delay (DLY) 40. The carrier reference signal from oscillator 16 is squared by a signal shaper 22 (Fig. 1) to produce the signal REF which is applied to a B input of dual edge phase detector 32, an A input of phase detector 34, and a first input of DLY 40. The data signal returned to receiver 20 is amplified by an amplifier 26 and squared by a signal shaper 28 to produce the signal DATA which is applied to an A input of dual edge phase detector 32.

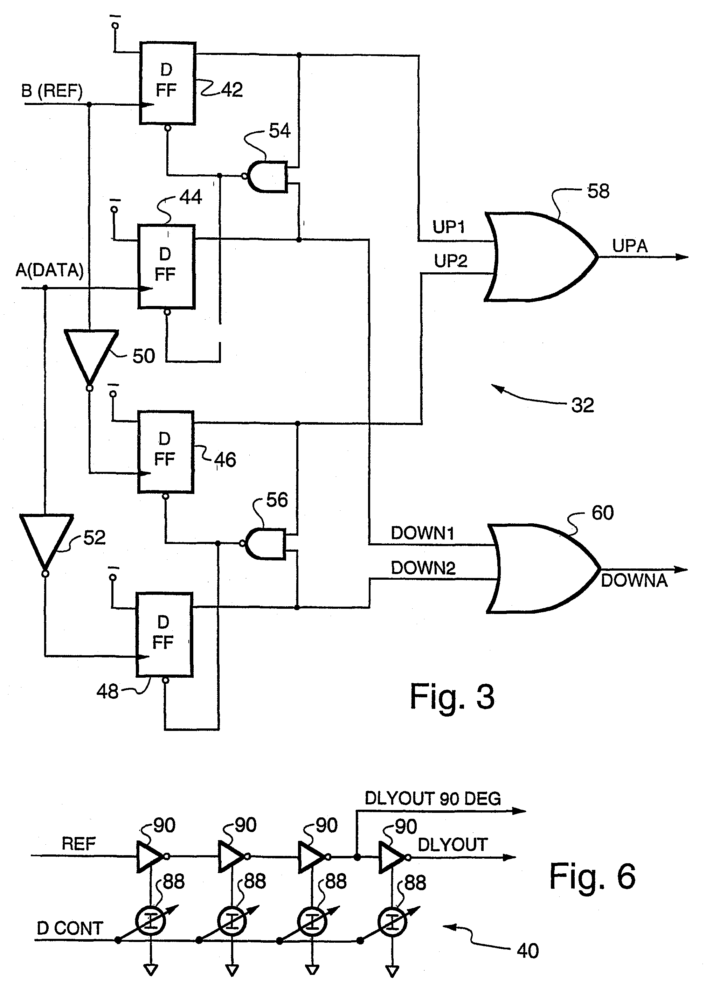

The dual edge phase detector 32 detects zero axis crossings of the signals REF and DATA and produces a signal UPA if REF leads DATA or a signal DOWNA if DATA leads REF. Referring to Fig. 3, the dual edge phase detector 32 comprises four D-flip-flops, 42, 44, 46 and 48, two inverters 50 and 52, two NANDs 54 and 56, and two Or circuits 58 and 60.

The signal REF is applied to FF42 and is inverted by inverter 50 before being applied to FF46. The signal DATA is applied to FF44 and is inverted by inverter 52 before being applied to FF48. The output of FF42 is the signal UP1 which is applied to Or 58 and a first input of NAND 54. The output of FF44 is the signal DOWN1 which is applied to Or 60 and a second input of NAND 54. In like manner, the output of FF46 is the signal UP2 that is applied to Or 58 and a first input of NAND 56, and the output of FF48 is the signal DOWN2 applied to Or 60 and a second input of NAND 56. The output of NAND 54 is connected to the reset input of FF42 and FF44 while the output of NAND 56 is connected to the reset input of FF46 and FF48.

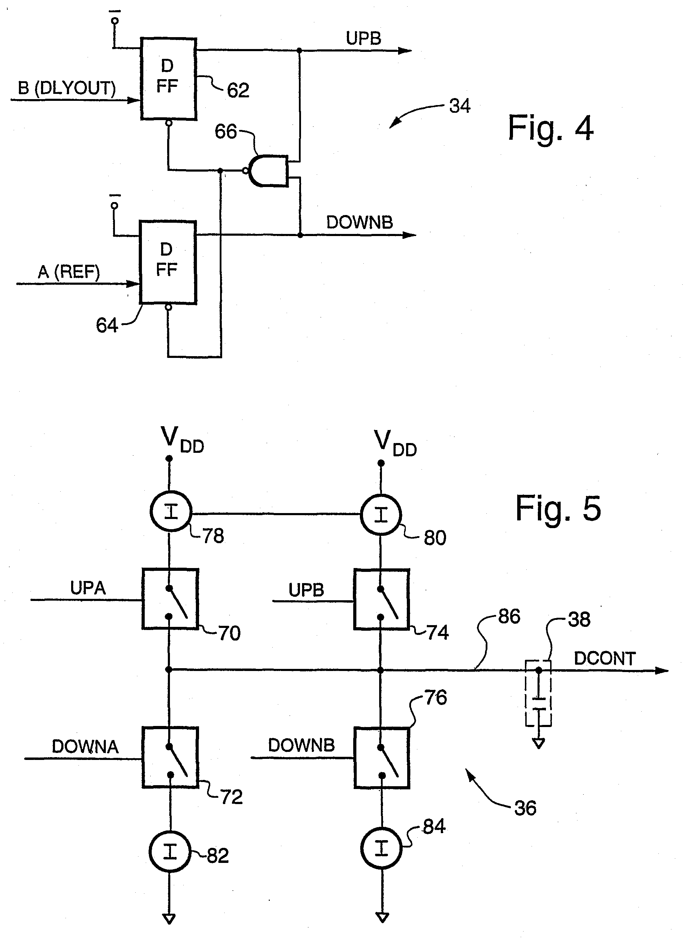

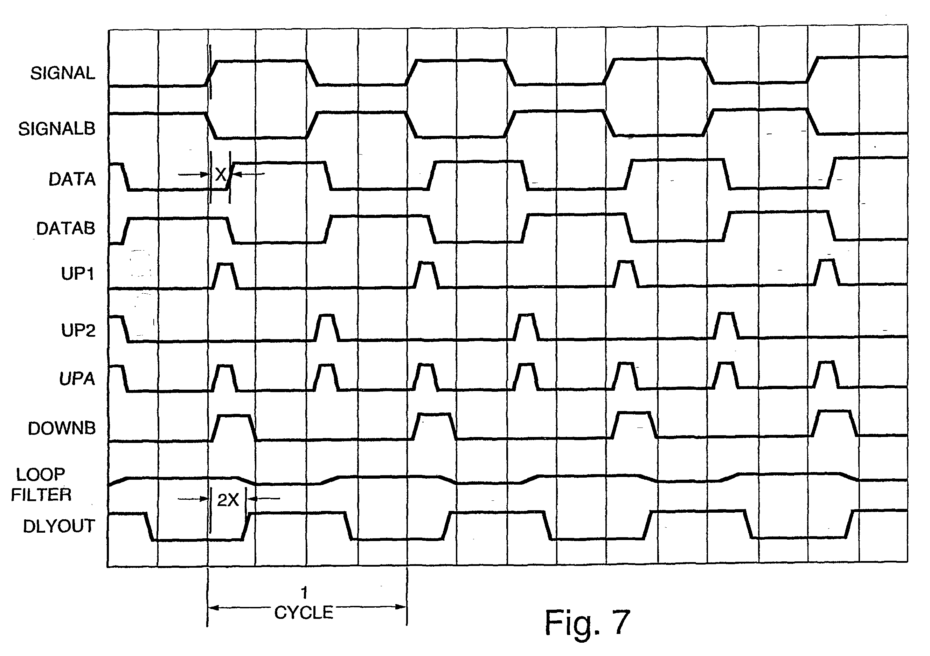

Referring to Figs. 3 and 7, and assuming that the signal REF leads the signal DATA, the dual edge phase detector 32 operates as follows. When the signal REF crosses the zero axis in the positive direction it sets FF42 thus generating the signal UP1 to enable one input of NAND 54. The signal UP1 passes through Or 58 to become the signal UPA. This signal is applied to an electronic switch 70 (Fig. 5) in the offset charge pump 36.

When the signal Data crosses the zero axis in the positive direction it sets FF44 thus producing the signal DOWN1. This signal passes through Or 60 to become the signal DOWNA (not shown in Fig. 7) that is applied to an electronic switch 72 (Fig. 5) in the offset charge pump 36. The signal DOWN A persists only momentarily. As soon as FF44 is set, its output signal enables the second input of NAND 54 and the output of the NAND resets FF42 and FF44 thus terminating both UPA and DOWNA.

When the signal REF crosses the zero axis in the negative direction the output of inverter 50 sets FF46 thus generating the signal UP2 to enable one input of NAND 56. The signal UP2 passes through Or 58 to become the signal UPA which is applied to electronic switch 70 in the offset charge pump 36.

When the signal Data crosses the zero axis in the negative direction it sets FF48 thus producing the signal DOWN2. This signal passes through Or 60 to become the signal DOWNA that is applied to electronic switch 72 in the offset charge pump 36. Again, the signal DOWNA persists only momentarily. As soon as FF48 is set, its output signal enables the second input of NAND 56 and the output of the NAND resets FF46 and FF48 thus terminating both UPA and DOWNA.

From the preceding description it is seen that FF42 and FF44 detect the leading edges of the signals REF and DATA, respectively, and produce the signal UPA having a duration proportional to the error or difference in phase between the leading edges of the two signals. In like manner, FF46 and FF48 detect the trailing edges of the signals REF and DATA, respectively, and again produce the signal UPA proportional to the difference in phase between the trailing edges of the two signals. Thus, over one cycle the duration of UPA is proportional to twice the phase error between the signals REF and DATA.

When the signal DATA leads the signal REF, detector 32 produces two pulses of the signal DOWNA, the total duration of the two pulses being proportional to twice the difference in phase between the signals DATA and REF. In this case, zero axis crossings of the signal DATA set either FF44 (for positive-going crossings) or FF48 (for negative-going crossings) to produce the signal DOWNA. The signal DOWNA is terminated when FF42 or FF46 is set by the signal REF since the setting of FF42 causes NAND 54 to reset both FF42 and FF44 and the setting of FF46 causes NAND 56 to reset FF46 and FF48.

As shown in Fig. 4, the phase detector 34 comprises two D-flip-flops 62 and 64 having outputs connected to a NAND 66. Phase detector 34 detects the difference in phase between the leading edges of the signal REF and the control loop feedback signal DLYOUT derived from controllable delay 40 as subsequently described. If the signal DLYOUT leads the signal REF then FF62 is set as DLYOUT goes positive. FF62 produces the signal UPB which is applied to an electronic switch 74 (Fig. 5) in offset charge pump 36. Subsequently, when the signal REF goes positive it enables NAND 66 and the output of the NAND resets both FF62 and FF64 thus terminating the signal UPB.

If the signal REF leads the signal DLYOUT then REF sets FF64 first to produce the signal DOWNB and this signal is applied to an electronic switch 76 in the offset charge pump 36. DOWNB is terminated when the signal DLYOUT goes positive to set FF62, and then, through NAND 66, reset both FF62 and FF64.

As shown in Fig. 5, the offset charge pump 36 comprises the electronic switches 70, 72, 74 and 76, previously mentioned, and a current generating means illustrated as two positive current generators 78 and 80, and two negative current generators 82 and 84. Positive current generators 78 and 80 are connected to the offset pump output line 86 through electronic switches 70 and 74, respectively whereas the negative current generators 82 and 84 are connected to the output line 86 via electronic switches 72 and 76, respectively.

The output lead 86 of the offset charge pump is connected via loop filter 36 to four current generators 88 (Fig. 6) in the controllable delay circuit 40. The controllable delay circuit 40 further comprises four controllable delay amplifiers 90 connected in series, the signal REF being applied to the first amplifier in the series. The output of the last amplifier in the series is the signal DLYOUT which is applied to phase detector 34 and is also used in receiver circuits 20 to sample the signal DATA to recover the data from the modulated carrier signal transmitted by tag circuit 12.

The controllable delay circuit 40 need not be implemented as shown. Any form of controllable delay elements may be used. The delay circuit 40 may also be implemented as a single controllable delay. However, a delay circuit comprising four controllable delay elements permits quadrature (I/Q) detection of the input signal. The signal DELAYOUT90DEG at the output of the next to last delay amplifier leads the signal DELAYOUT by 90 degrees. These two signals may be applied to an I/Q demodulator (not shown) in receiver circuits 20 for I/Q detection of the data.

Phase detector 34, offset charge pump 36, filter 38 and controllable delay 40 comprise a delay locked loop which, in the absence of signals from dual edge phase detector 32, produces the signal DLYOUT that is in phase with the signal REF. If the signal REF should shift in phase so as to lead the signal DLYOUT, phase detector 32 produces the signal DOWNB to activate switch 76 (Fig. 5) and connect negative current generator 84 to the output lead 86 of the offset charge pump 36. This causes a decrease in the voltage on the capacitor of filter 38 and a corresponding decrease in the control signal DCONT applied to current generators 88 (Fig. 6). In response to a decrease in the control signal DCONT the current generators 88 increase the currents applied to delay amplifiers 90 so that the delay of the signal REF in each amplifier is decreased by one-fourth the difference in phase between the signals REF and DLYOUT as detected by phase detector 34 and the signal DLYOUT is brought into phase with the signal REF. The bandwidth of the delay locked loop must be low to minimize jitter.

On the other hand, if phase detector 34 detects that the signal REF trails the signal DLYOUT, the detector produces the signal UPB to turn on electronic switch 74, thereby increasing the voltage on output lead 86. The resulting increase in the control signal DCONT causes a decrease in the control signals applied to delay amplifiers 90 so that the delay imparted to the signal REF by the series of delay amplifiers is increased by an amount equal to the difference in phase between the signals REF and DLYOUT as detected by phase detector 34, thus bringing the signal DLYOUT in phase with the signal REF.

The dual edge phase detector 32 and the switches 70 and 72 in the offset charge pump 36 comprise a means for injecting a phase offset into the operation of the delay locked loop so that the signal DLYOUT, instead of being locked in phase with the signal REF, is locked to the signal REF with a phase offset of 2x where x is the phase difference between the carrier reference signal REF and the modulated signal DATA returned to the reader a the tag circuit 12. The dual edge phase detector 32 detects the phase difference between the signals REF and DATA as previously described and produces one of the signals UPA or DOWNA depending on which of the signals is leading.

If the signal REF is leading the signal DATA, dual edge phase detector 32 produces the signal UPA to turn on switch 70 in the offset charge pump 36 twice during each cycle, once when the signal UP1 is produced by the difference in phase between the leading edges of the signals and once when the signal UP2 is produced by the difference in phase between the trailing edges. Switch 70 connects positive current generator 78 to the output lead 86 so that the capacitor comprising filter 38 is charged to some voltage depending on the duration of the signal UPA (the sum of the durations of signals UP1 and UP2). Thus the signal DCONT rises to a voltage representing twice the difference in phase between the signals REF and DATA. The signal DCONT controls current generators 88 to decrease the control signals applied to delay amplifiers 90 so that the series of delay amplifiers delays the signal REF by twice the difference in phase between the signal REF and DATA. Therefore, the output signal DLYOUT produced by the controllable delay 40 may be used by circuits (not shown) in receiver circuit 20 to sample the signal DATA at the optimum time.

Since the signal DLYOUT has been delayed by 2x relative to the signal REF, the phase detector 34 will produce the signal DOWNB for an interval 2x on the next cycle thereby tending to discharge filter capacitor 38 through switch 76 at the same time the first UPA pulse connects the filter capacitor to positive current generator 78 through switch 70.

It should be obvious from the foregoing description that if the signal DATA leads the signal REF on a given cycle then phase detector 34 produces the signal UPB on the next cycle, UPB having a duration of 2*x*.

Although the invention has been described to illustrate its principle of operation, it will be understood that various modifications and substitutions may be made in the described embodiment without departing from the scope of the invention as defined by the appended claims. For example, current generators 70 and 74 may be replaced with a single positive current generator controlled by both the signals UPA and UPB. In like manner, current generators 72 and 76 may be replaced with a single negative current controlled by the signals DOWNA and DOWNB. Other types of phase detectors and/or delay elements may be used.

## Claims

1. A radio frequency identification device comprising a tag reader for transmitting a radio frequency carrier reference signal and a tag circuit for modulating the reference signal to produce a modulated data signal that is returned to the tag reader, the tag reader being **characterized in that** it comprises:
a delay locked loop for producing a sampling signal that is phase locked to said reference signal;
detector means for detecting a phase difference between said reference signal and said data signal; and,
means responsive to said detector means for injecting an offset signal into said delay locked loop whereby said sampling signal is phase locked to said reference signal with a phase difference that is twice the detected phase difference between said reference signal and said data signal.

2. A radio frequency identification device as claimed in claim 1 wherein said detector means comprises a dual edge phase detector.

3. A radio frequency identification device as claimed in claim 2 wherein said dual edge phase detector comprises means producing a first pulse having a duration proportional to the difference in phase between leading edges of said reference and said data signal and a second pulse having a duration proportional to the difference in phase between trailing edges of said reference and said data signal.

4. A radio frequency identification device as claimed in claim 2 wherein said dual edge phase detector comprises first, second, third and fourth flip-flops each ' having an output, said reference signal being connected to said first flip-flop and through an inverter to said third flip-flop, said data signal being connected to said second flip-flop and through another inverter to said fourth flip-flop, a first NAND connected to the outputs of said first and second flip-flops for resetting said first and second flip-flops, a second NAND connected to the outputs of said third and fourth flip-flops for resetting said third and fourth flip-flops, and first and second OR circuits, the outputs of said first and third flip-flops being connected to said first OR circuit and the outputs of said second and forth flip-flops, being connected to said second OR circuit, whereby said first OR circuit produces said first and second pulses when said reference signal leads said data signal and said second OR circuit produces said first and second pulses when said data signal leads said reference signal.

5. A radio frequency identification device as claimed in claim 1 wherein said phase locked loop comprises a further phase detector for detecting a phase difference between said reference signal and said sampling signal and producing a control signal proportional to the phase difference, a controllable delay circuit responsive to said reference signal for producing said sampling signal, filter capacitor on which a voltage is developed to control the delay imparted to said reference signal by said controllable delay circuit, and means responsive to said further phase detector for controlling the voltage on said filter capacitor.

6. A radio frequency identification device as claimed in claim 5 wherein said means responsive to said further phase detector for controlling the voltage on said filter capacitor comprises current generating means connected to said filter capacitor through switch means controlled by said further phase detector.

7. A radio frequency identification device as claimed in claim 5 wherein said further phase detector produces a first signal when said reference signal leads said sampling signal or a second signal when said sampling signal leads said reference signal, said means responsive to said further phase detector for controlling the voltage on said filter capacitor comprising a negative current generator connected to said filter capacitor through a switch controlled by said first signal and a positive current generator connected to said filter capacitor through a second switch controlled by said second signal.

8. A radio frequency identification device as claimed in claim 1 wherein said phase locked loop comprises a further phase detector for detecting a phase difference between said reference signal and said sampling signal and producing a control signal proportional to the phase difference, a controllable delay circuit for delaying said reference signal to produce said sampling signal, a filter capacitor on which a voltage is developed to control the delay imparted to said reference signal by said controllable delay circuit, and means responsive to said further phase detector for controlling the voltage on said filter capacitor, said means for injecting an offset signal into said delay locked loop comprising current generators connected to said filter capacitor through switches controlled by said dual edge phase detector.

9. A radio frequency identification device as claimed in claim 8 wherein said dual edge phase detector comprises means for producing a first signal of two pulses when said reference signal leads said data signal or a second signal of two pulses when said data signal leads said reference signal, said means for injecting an offset signal into said delay locked loop comprising a positive current generator connected to said filter capacitor through a first switch controlled by said first signal and a negative current generator connected to said filter capacitor through a second switch controlled by said second signal.

## Patentansprüche

1. Hochfrequenz-Identifizierungsvorrichtung, die einen Etikett-Leser zum Senden eines Hochfrequenz-Trägerreferenzsignals und eine Etikett-Schaltung, die das Referenzsignal moduliert, um ein moduliertes Datensignal zu erzeugen, das zum Etikett-Leser zurückgeleitet wird, umfasst, wobei der Etikett-Leser **dadurch gekennzeichnet ist, dass** er umfasst:
eine Verzögerungsverriegelungsschleife, die ein Abtastsignal erzeugt, das mit dem Referenzsignal phasenverriegelt ist;
Detektormittel, die eine Phasendifferenz zwischen dem Referenzsignal und dem Datensignal erfassen; und
Mittel, die in Reaktion auf die Detektormittel ein Offset-Signal in die Verzögerungsverriegelungsschleife einleiten, wodurch das Abtastsignal mit dem Referenzsignal mit einer Phasendifferenz phasenverriegelt wird, die gleich der doppelten erfassten Phasendifferenz zwischen dem Referenzsignal und dem Datensignal ist.

2. Hochfrequenz-Identifizierungsvorrichtung nach Anspruch 1, bei der die Detektormittel einen Doppelflanken-Phasendetektor umfassen.

3. Hochfrequenz-Identifizierungsvorrichtung nach Anspruch 2, bei der der Doppelflanken-Phasendetektor Mittel umfasst, die einen ersten Impuls, der eine Dauer besitzt, die zu der Phasendifferenz zwischen den Vorderflanken des Referenz- bzw. des Datensignals proportional ist, und einen zweiten Impuls, der eine Dauer besitzt, die zu der Phasendifferenz zwischen den Hinterflanken des Referenz- bzw. des Datensignals proportional ist, erzeugen.

4. Hochfrequenz-Identifizierungsvorrichtung nach Anspruch 2, bei der der Doppelflanken-Phasendetektor umfasst: ein erstes, ein zweites, ein drittes und ein viertes Flipflop, wovon jedes einen Ausgang besitzt, wobei das Referenzsignal mit dem ersten Flipflop und über einen Inverter mit dem dritten Flipflop verbunden ist und das Datensignal mit dem zweiten Flipflop und über einen weiteren Inverter mit dem vierten Flipflop verbunden ist, ein erstes NAND-Gatter, das mit den Ausgängen des ersten und des zweiten Flipflops verbunden ist, um das erste bzw. das zweite Flipflop zurückzusetzen, ein zweites NAND-Gatter, das mit den Ausgängen des dritten und des vierten Flipflops verbunden ist, um das dritte bzw. das vierte Flipflop zurückzusetzen, und eine erste und eine zweite ODER-Schaltung, wobei die Ausgänge des ersten und des dritten Flipflops mit der ersten ODER-Schaltung verbunden sind und die Ausgänge des zweiten und des vierten Flipflops mit der zweiten ODER-Schaltung verbunden sind, wodurch die erste ODER-Schaltung den ersten und den zweiten Impuls erzeugt, wenn das Referenzsignal dem Datensignal vorausgeht, und die zweite ODER-Schaltung den ersten und den zweiten Impuls erzeugt, wenn das Datensignal dem Referenzsignal vorausgeht.

5. Hochfrequenz-Identifizierungsvorrichtung nach Anspruch 1, bei der die Phasenverriegelungsschleife umfasst: einen weiteren Phasendetektor, der eine Phasendifferenz zwischen dem Referenzsignal und dem Abtastsignal erfasst und ein Steuersignal erzeugt, das zu der Phasendifferenz proportional ist, eine steuerbare Verzögerungsschaltung, die in Reaktion auf das Referenzsignal das Abtastsignal erzeugt, einen Filterkondensator, an dem eine Spannung aufgebaut wird, um die dem Referenzsignal auferlegte Verzögerung durch die steuerbare Verzögerungsschaltung zu steuern, und Mittel, die in Reaktion auf den weiteren Phasendetektor die Spannung an dem Filterkondensator steuern.

6. Hochfrequenz-Identifizierungsvorrichtung nach Anspruch 5, bei der die Mittel, die in Reaktion auf den weiteren Phasendetektor die Spannung an dem Filterkondensator steuern, Stromerzeugungsmittel umfassen, die mit dem Filterkondensator über Schaltermittel verbunden sind, die durch den weiteren Phasendetektor gesteuert werden.

7. Hochfrequenz-Identifizierungsvorrichtung nach Anspruch 5, bei der der weitere Phasendetektor ein erstes Signal erzeugt, wenn das Referenzsignal dem Abtastsignal vorhergeht, oder ein zweites Signal erzeugt, wenn das Abtastsignal dem Referenzsignal vorhergeht, wobei die Mittel, die in Reaktion auf den weiteren Phasendetektor die Spannung an dem Filterkondensator steuern, einen Generator für negativen Strom umfassen, der mit dem Filterkondensator über einen Schalter verbunden ist, der durch das erste Signal gesteuert wird, und einen Generator für positiven Strom umfassen, der mit dem Filterkondensator über einen zweiten Schalter verbunden ist, der durch das zweite Signal gesteuert wird.

8. Hochfrequenz-Identifizierungsvorrichtung nach Anspruch 1, bei der die Phasenverriegelungsschleife umfasst: einen weiteren Phasendetektor, der eine Phasendifferenz zwischen dem Referenzsignal und dem Abtastsignal erfasst und ein zu der Phasendifferenz proportionales Steuersignal erzeugt, eine steuerbare Verzögerungsschaltung, die das Referenzsignal verzögert, um das Abtastsignal zu erzeugen, einen Filterkondensator, an dem eine Spannung aufgebaut wird, um die dem Referenzsignal auferlegte Verzögerung durch die steuerbare Verzögerungsschaltung zu steuern, und Mittel, die in Reaktion auf den weiteren Phasendetektor die Spannung an den Filterkondensator steuern, wobei die Mittel zum Einleiten eines Offset-Signals in die Verzögerungsverriegelungsschleife Stromgeneratoren umfassen, die mit dem Filterkondensator über Schalter verbunden sind, der durch den Doppelflanken-Phasendetektor gesteuert werden.

9. Hochfrequenz-Identifizierungsvorrichtung nach Anspruch 8, bei der der Doppelflanken-Phasendetektor Mittel umfasst, um ein erstes Signal aus zwei Impulsen zu erzeugen, wenn das Referenzsignal dem Datensignal vorhergeht, oder um ein zweites Signal aus zwei Impulsen zu erzeugen, wenn das Datensignal dem Referenzsignal vorhergeht, wobei die Mittel zum Einleiten eines Offset-Signals in die Verzögerungsverriegelungsschleife einen Generator für positiven Strom umfassen, der mit dem Filterkondensator über einen ersten Schalter verbunden ist, der durch das erste Signal gesteuert wird, und einen Generator für negativen Strom umfassen, der mit dem Filterkondensator über einen zweiten Schalter verbunden ist, der durch das zweite Signal gesteuert wird.

## Revendications

1. Un dispositif d'identification radio fréquence comprenant un lecteur de balises pour transmettre un signal de référence porteur radio fréquence et un circuit de balise pour moduler le signal de référence pour produire un signal de données modulées qui est renvoyé au lecteur de balises, le lecteur de balises étant **caractérisé en ce qu'**il comprend :
une boucle à verrouillage de retard pour produire un signal d'échantillonnage qui est verrouillé en phase par rapport audit signal de référence;
des moyens de détection pour détecter une différence de phase entre ledit signal de référence et ledit signal de données; et,
des moyens sensibles auxdits moyens de détection pour injecter un signal décalé dans ladite boucle à verrouillage de retard au moyen de laquelle ledit signal d'échantillonnage est verrouillé en phase par rapport audit signal de référence avec une différence de phase qui est deux fois la différence de phase détectée entre le signal de référence et ledit signal de données.

2. Un dispositif d'identification radio fréquence selon la revendication 1 dans lequel les moyens de détection comprennent un détecteur de phase à doubles fronts.

3. Un dispositif d'identification radio fréquence selon la revendication 2 dans lequel le détecteur de phase à doubles fronts comprend des moyens pour produire une première impulsion ayant une durée proportionnelle à la différence de phase entre les fronts montants dudit signal de référence et dudit signal de données, et une deuxième impulsion ayant une durée proportionnelle à la différence de phase entre les fronts descendants dudit signal de référence et dudit signal de données.

4. Un dispositif d'identification radio fréquence selon la revendication 2 dans lequel ledit détecteur de phase à doubles fronts comprend des première, deuxième, troisième et quatrième bascules, chacune ayant une sortie, ledit signal de référence étant connecté à ladite première bascule et au travers d'un inverseur à ladite troisième bascule, ledit signal de données étant connecté à ladite deuxième bascule et au travers d'un inverseur à ladite quatrième bascule, une première porte NON ET connectée aux sorties desdites première et deuxième bascules pour mettre à zéro lesdites première et deuxième bascules, une seconde porte NON ET connectée aux sorties desdites troisième et quatrième bascules pour mettre à zéro lesdites troisième et quatrième bascules, et des premier et deuxième circuits OU, les sorties des première et troisième bascules étant connectées audit premier circuit OU et les sorties desdits deuxième et quatrième bascules étant connectées audit second circuit OU, par lequel le premier circuit OU produit lesdites premières et deuxièmes impulsions lorsque le signal de référence est en avance sur le signal de données et ledit second circuit OU produit lesdites premières et deuxièmes impulsions lorsque le signal de données est en avance sur le signal de référence.

5. Un dispositif d'identification radio fréquence selon la revendication 1 dans lequel ladite boucle à verrouillage de phase comprend un autre détecteur de phase pour détecter une différence de phase entre le signal de référence et ledit signal d'échantillonnage et produire un signal de commande proportionnel à la différence de phase, un circuit de retard commandable sensible audit signal de référence pour produire ledit signal d'échantillonnage, un condensateur de filtrage sur lequel une tension est développée pour commander le retard imparti audit signal de référence par ledit circuit de retard commandable, et des moyens sensibles audit autre détecteur de phase pour commander la tension dudit condensateur de filtrage.

6. Un dispositif d'identification radio fréquence selon la revendication 5 dans lequel lesdits moyens sensibles audit autre détecteur de phase pour commander la tension dudit condensateur de filtrage comprend des moyens pour générer du courant connectés audit condensateur de filtrage à travers de moyens de commutation commandés par ledit autre détecteur de phase.

7. Un dispositif d'identification radio fréquence selon la revendication 5 dans lequel ledit autre détecteur de phase produit un premier signal lorsque ledit signal de référence est en avance sur ledit signal d'échantillonnage ou un second signal lorsque ledit signal d'échantillonnage est en avance sur ledit signal de référence, lesdits moyens sensibles audit autre détecteur de phase pour commander la tension aux bornes dudit condensateur de filtrage, comprenant un générateur de courant négatif connecté audit condensateur de filtrage au travers d'un commutateur commandé par ledit premier signal et un générateur de courant positif connecté audit condensateur de filtrage au travers d'un second commutateur commandé par ledit second signal.

8. Un dispositif d'identification radio fréquence selon la revendication 1 dans lequel ladite boucle à verrouillage de phase comprend un autre détecteur de phase pour détecter une différence de phase entre ledit signal de référence et ledit signal d'échantillonnage et produire un signal de commande proportionnel à la différence de phase, un circuit de retard commandable pour retarder ledit signal de référence pour produire ledit signal d'échantillonnage, un condensateur de filtrage aux bornes duquel une tension est développée pour commander le retard imparti audit signal de référence par le circuit de retard commandable, et des moyens sensibles audit autre détecteur de phase pour commander la tension aux bornes dudit condensateur de filtrage, lesdits moyens pour injecter un signal décalé dans ladite boucle à verrouillage de retard comprenant des générateurs de courant connectés audit condensateur de filtrage au travers de commutateurs commandés par le détecteur de phase à doubles fronts.

9. Un dispositif d'identification radio fréquence selon la revendication 8 dans lequel ledit détecteur de phase à doubles fronts comprend des moyens pour produire un premier signal à deux impulsions lorsque ledit signal de référence est en avance sur ledit signal de données ou un second signal à deux impulsions lorsque ledit signal de données est en avance sur ledit signal de référence, lesdits moyens pour injecter un signal décalé dans ladite boucle à verrouillage de retard comprenant un générateur de courant positif connecté audit condensateur de filtrage au travers d'un premier commutateur commandé par ledit premier signal et un générateur de courant négatif connecté audit condensateur de filtrage au travers d'un second commutateur commandé par ledit second signal.
